# EUROPEAN PATENT SPECIFICATION

(11) **EP 0 982 059 B1**
(45) Date of publication and mention of the grant of the patent: **21.05.2003**
(21) Application number: 99810703.1
(22) Date of filing: 06.08.1999
(51) Int. Cl.: B01D 29/11, B01D 35/12

(54) **Filtration apparatus with filter cartridges and integrated regeneration system**
Filtervorrichtung mit Filterpatronen und integriertem Regeneriersystem
Dispositif de filtration avec des cartouches filtrantes et un system de régénération intégré

(30) Priority: 25.08.1998 CH 174398
(43) Date of publication of application: 01.03.2000
(73) Proprietor: Maggetti, Luciano, 6616 Losone (CH)
(72) Inventor: Maggetti, Luciano, 6616 Losone (CH)
(74) Representative: Fiammenghi-Domenighetti, Delfina

(56) References cited:
- WO-A-92/17263
- DE-A- 2 211 039
- DE-A- 3 405 179
- DE-U- 1 741 632
- US-A- 2 985 306
- US-A- 5 516 426

## Description

The present invention relates to the technological field of apparatus used for filtering fluids such as oils and emulsions for machine tools, for electrical discharge machines, etc.

Such apparatus is usually fitted with cartridge filter elements which, after a predetermined period of operation, prevent the circulation of the fluid that is to be filtered because of partial clogging of their pores.

The machine or machines using the filtered fluid must therefore be stopped and the filter cartridge regenerated with jets of compressed air and/or solvent directed in the opposite direction to that followed by the fluid during its filtration.

All this causes a considerable loss of time, with a corresponding interruption of production or of the work being performed.

In order to avoid these problems, the inventor of the present innovation has devised an apparatus for the filtration of fluids and for the cyclical regeneration and cleaning of the filter cartridges which allows the said operations to be performed continuously, practically without having to stop the machines that are using the filtered fluid.

This is due to the fact that the invention comprises an even number of filter stations and filter cartridge cleaning stations equal to the sum of the filter cartridges, these elements being cyclically moved from a cleaning station to a filter station and vice versa.

This means that, except for a very short period of time due to the emptying of containers which, when their filtration function is temporarily exhausted, must be moved to a cleaning station, fluid filtration takes place continuously, using two adjacent containers with filter cartridges in alternation.

The inventor believes that an apparatus of this type does not come within the current state of the art. Some apparatuses of the prior art, such as those disclosed by Patent US-A-2 985 306, Patent Application DE 3405179 A1, Patent US-A-5 516 426 and others, comprise single parts or features that may recall those of the apparatus of the present invention, but shape and position of the parts, as well as the way they are interconnected and work during an operation cycle are different, and as a consequence they cannot lead to reach the advantages offered by an apparatus realized according to the invention.

The invention consists in fact of an apparatus as described in the preamble of the appended Claim 1, but characterized by characterizing part of the same claim. A preferred embodiment of the invention will now be described for illustrative purposes without employing any necessity or restriction in regard to other embodiments obtainable by those skilled in the art on the basis of the teachings of the appended claims.

The description will also refer to the appended drawings, which show:
- Figure 1, a perspective exploded sketch of the above mentioned illustrative example of the apparatus of the invention;
- Figure 2, a longitudinal section through a container with a filter cartridge in a filter station;
- Figure 3, a longitudinal section through a container with a filter cartridge in a station in which cleaning of the latter is carried out;
- and Figure 4, a longitudinal section through part of the apparatus consisting of only the supporting base, in which two collectors for the filter residues can be seen.

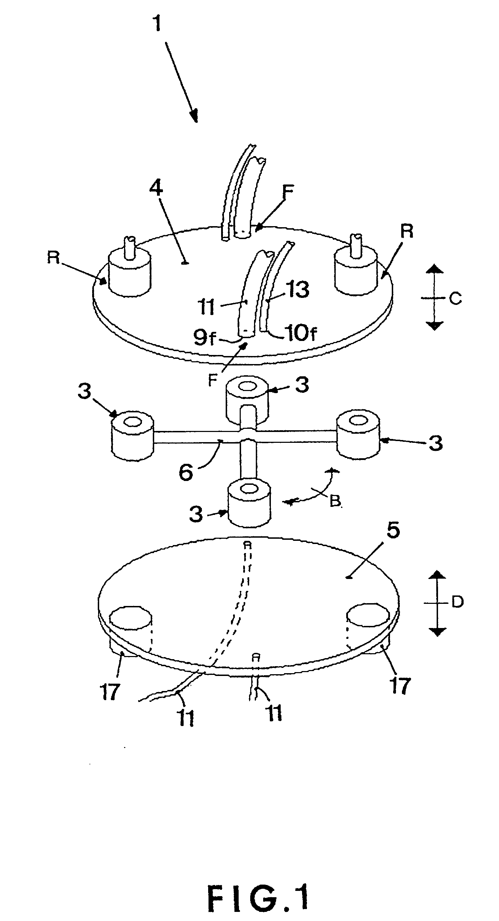

The present embodiment of the apparatus can be seen in Figure 1, in which it will be seen that it comprises an event number 2n (four in the example illustrated) of filter stations F and filter residue removal stations R.

These station types alternate with each other, in such a way that each filter station F is adjacent to a removal station R.

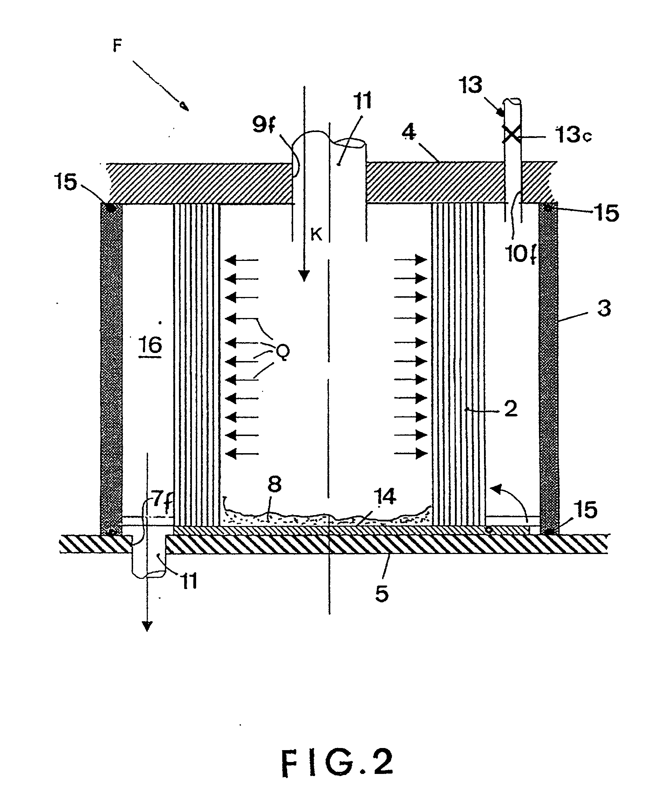

The apparatus also comprises four containers 3 (that is, a number equal to the total number of the said stations F, R), in each of which a filter cartridge 2 is housed. The said containers 3 (see for example Figure 2) are of cylindrical shape and are coaxial with the said cartridges 2, which are likewise of cylindrical form.

The containers 3 are connected together by a cross member 6 that can be rotated in both directions (see arrow B), and two plates 4, 5, of which the first acts as a single cover plate 4 and the other as a single supporting plate 5 for all the containers 3, which are placed against the opposite ends of these containers.

It is advisable to insert elastic seals 15 between each container 3 and the said two plates 4, 5.

The two plates described above are also connected to means (not shown) for moving them vertically in opposite directions (see arrows C, D) by predetermined distances in order to remove the pressure exerted by them on the containers 3.

It is therefore possible, by rotating the member 6 after having moved the plates 4 and 5 as described above, to move any container 3 from a filter station F to a residue removal station R and vice versa.

These rotations and movements can be carried out either manually or automatically by known technical means, possibly also under the control of an electromechanical timer or a computer program.

With an apparatus as described above it is therefore possible to use for filtration a container 3 with its filter cartridge 2 in a filter station F until the pores of the cartridge 2 are so clogged with residues that the flow of fluid to be filtered is reduced to a limit that is no longer acceptable: at this point the feed of fluid through this filter station F is interrupted, and the container is emptied and moved to a residue removal station R for removal of the residues.

Another container, which has just finished undergoing this treatment, will consequently be moved round to the filter station left unoccupied by the previous container, and the operation of fluid filtration can thus continue through the new container after only a brief pause occasioned by the abovementioned emptying of the no longer fully operative container 3 and its removal between the two plates 4, 5 to the residue removal station R, where its filter cartridge is "regenerated" as will be explained in greater detail below.

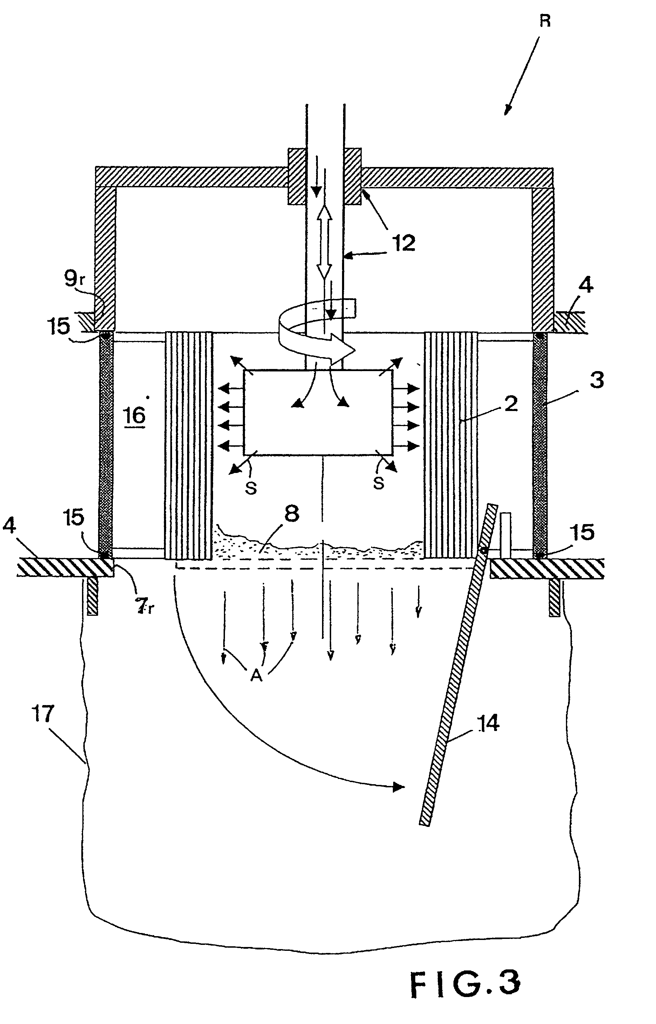

For a clearer understanding of the method made possible by the equipment according to the invention, Figures 2 and 3 may now also be considered.

Of the latter, Figure 2 shows a container 3 positioned in a filter station F. Between the filter cartridge 2, which as stated is coaxial with the container 3, and the container 3 is a circumferential gap 16 connected to a compressed air circuit 13 via an opening 10f formed for this station in the cover plate 4 (see also Figure 1) and fitted with a controllable shut-off valve 13C.

The axis of the cartridge 2 is lined up with the axis of another opening 9f which communicates with the circuit 11 carrying the fluid that is being filtered. The fluid enters the interior of the cartridge 2 (arrow K) and passes through its walls (arrow Q), in the process of which it is filtered. It then proceeds through a hole 7f in the supporting plate 5 to join another branch of the circuit 11 which conveys it to its point of use.

The above happens during filtration of the fluid in the said container 3. When the cartridge 2 is caked up, the circulating flow of fluid is interrupted, the container 3 is emptied of the fluid by compressed air injected through the opening 10f, the plates 4, 5 are moved away and the said member 6 is then rotated until the container 3 in question is positioned (see Figure 3) on a filtration residue removal station.

A device is inserted into the filter cartridge 2 through a special opening 9r in the cover plate 4 in order to regenerate the cartridge 2: in the case in question this device is a vertically movable rotary head 12 capable of spraying a multidirectional spray of a desired type of liquid for cleaning out the filter cartridges 2.

The filtration residues fall off the walls of the cartridge 2 and join the residues 8 that have already collected on the bottom of the container 3 during the filtering process.

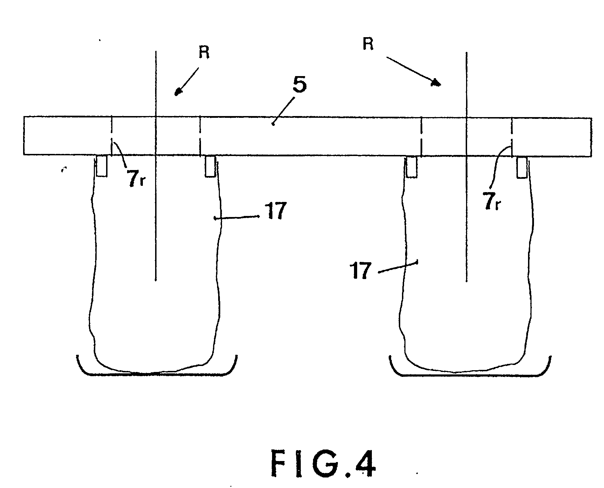

At this point, the cleaning of the cartridge 2 having been completed, a trapdoor 14 is opened downwards through an opening 7r in the supporting plate 5, so allowing all the residues 8 to fall into a collector 17 fixed to the underside of the supporting plate 5 underneath each residue removal station R, as indicated also in Figure 4.

The container 3, whose filter cartridge 2 has been regenerated by removal of the filtration residues, is ready to be returned to the filter station F from which it came initially, replacing the container which took its place in the filtering process and which, having lost much of its efficacy, is itself returned to the residue removal station which it had left after having been regenerated.

It is obvious that, with the apparatus according to the invention, the filtering process can be carried out virtually "continuously", using for this purpose half of the 2n containers 3, and in the meantime regenerating the remaining containers which in turn will subsequently take over from them.

The embodiment illustrated and described is not the only embodiment that can be produced in accordance with the teachings of the appended claims: the various components and their operational actuation can be modified by a person skilled in the art, bearing in mind that other embodiments produced in this way will still lie within the scope of the protection conferred by the present patent application.

The total number 2n of stations may be freely varied depending on the throughput of fluid or on other variables.

## Claims

1. Apparatus (1)provided with filter cartridges (2) which filter a fluid passing through them along a predetermined circuit and with means which cyclically removes the filter residues from these cartridges (2), the apparatus being **characterized in that** it comprises:
- an even number of containers (3) open at their ends to take the said filter cartridges(2);
- a plurality of filter stations (F) alternating with an equivalent number of removal stations (R) where the residues are removed from the filter cartridges (2), the stations being arranged symmetrically about a predetermined point (O);
- one cover plate (4) resting on the upper ends of all the said containers (3); and
- one supporting plate (5) arranged underneath the said containers (3);
the device (1) also being provided with means (6) for rotating all the said containers (3)together from one station to an adjacent station, with means for moving said cover (4) and supporting (5) plates of predetermined distance in opposite vertical directions in order to allow the containers (3) to be rotated together in this way.

2. Apparatus according to Claim 1, **characterized in that** it comprises:
a) an even number "2n" of containers (3) arranged symmetrically about a predetermined point (O), each taking a filter cartridge (2) and being connected to each other by a member (6) capable of being rotated about the said point (0);
b) a supporting plate (5) on which the said containers (3) rest, this plate being provided, underneath each container, with an opening (7r, 7f), the two openings being adjacent, one (7f) being for the said fluid to pass through after filtration and the other (7r) for the said filter residues (8) to pass through;
c) a cover plate (4) resting on the upper ends of the said containers (3) and provided with groups of one or more openings (9r, 9f, 10f) situated above these containers, any two groups of adjacent openings being respectively designed
- one (9r) to allow the insertion of a device (12) for cleaning a filter cartridge (2); and
- the other (9f, 10f) to allow connection of a container (3) to the said circuit (11) around which the fluid to be filtered is flowing and to a compressed air circuit (13);
the said supporting (5) and cover (4) plates being provided with means for moving them down and up, respectively, by a predetermined distance in order to allow the said rotatable member (6) to execute a predetermined rotation about the said point (O).

3. Apparatus according to Claim 2, in which each container (3) is provided on its lower end with a flat outward-opening trap door (14) situated underneath the associated filter cartridge (2), the whole of which stands on the said trap door (14).

4. Apparatus according to one of the preceding claims, in which elastic seals (15) are inserted between the edges of each container (3) and the said supporting (5) and cover (4) plates.

5. Apparatus according to one of the preceding claims, in which the containers (3) are cylindrical and, between each of these and its associated filter cartridge (2), which is coaxial and also cylindrical, is a gap (16) of predetermined thickness all the way around the outer perimeter of the cartridge.

6. Apparatus according to one of the preceding claims, in which the fluid to be filtered flows radially from the inside of the filter cartridge (2) out.

7. Apparatus according to one of the preceding claims, comprising "2n" containers (3) and having "n" devices (12) capable of being introduced inside a filter cartridge (2) in order to clean it from the inside out.

8. Apparatus according to Claim 7, in which the said devices comprise vertically movable rotary heads (12) for spraying a multidirectional spray of a desired liquid to clean the filter cartridges (2).

9. Apparatus according to one of the preceding claims in which underneath each of the said openings (7r) in the supporting plate (5), for the filter residues (8) to pass through, is a collecting member (17) able to hold the said residues.

## Patentansprüche

1. Vorrichtung (1) mit Filterpatronen (2), die ein sie durchströmendes Fluid eines vorgegebenen Kreislaufs filtern, und mit einer Einrichtung, die die Filterrückstände zyklisch von den Filterpatronen (2) entfernt, **gekennzeichnet durch**
- eine gerade Anzahl Behälter (3), die an ihren Enden offen sind, um die Filterpatronen (2) aufzunehmen;
- eine Vielzahl Filterstationen (F), die mit einer äquivalenten Anzahl Entfernstationen (R) abwechseln, in welchen die Rückstände von den Filterpatronen (2) entfernt werden, wobei die Stationen um einen vorgegebenen Punkt (O) herum symmetrisch angeordnet sind;
- eine Deckelplatte (4), die auf den oberen Enden aller Behälter (3) ruht; und
- eine Tragplatte (5), die unter den Behältern (3) angeordnet ist;
wobei die Vorrichtung (1) außerdem mit einer Einrichtung (6) zum Drehen aller Behälter (3) gemeinsam von einer Station zu einer benachbarten Station und mit einer Einrichtung zum Bewegen der Deckelplatte (4) und der Tragplatte (5) um eine bestimmte Distanz in entgegengesetzten vertikalen Richtungen versehen ist, um eine Rotation der Behälter (3) auf diese Weise zu ermöglichen.

2. Vorrichtung nach Anspruch 1,
**gekennzeichnet durch**
a) eine gerade Anzahl "2n" Behälter (3), die symmetrisch um einen vorgegebenen Punkt (O) herum angeordnet sind, von welchen jeder eine Filterhülse (2) aufnimmt und die **durch** ein Element (6) miteinander verbunden sind, das um den Punkt (O) drehbar ist;
b) eine Tragplatte (5), auf der die Behälter (3) ruhen, wobei die Tragplatte unter jedem Behälter mit einer Öffnung (7r, 7f) versehen ist, wobei die beiden Öffnungen zueinander benachbart sind und die eine Öffnung (7f) für das durchströmende Fluid nach der Filtration und die andere Öffnung (7r) für die durchströmenden Rückstände (8) vorgesehen ist;
c) eine Deckelplatte (4), die auf den oberen Enden der Behälter (3) ruht und mit Gruppen einer Öffnung oder von mehreren Öffnungen (9r, 9f, 10f) versehen ist, die über den Behältern vorgesehen sind, wobei zwei Gruppen benachbarter Öffnungen jeweils wie folgt ausgebildete sind:
- eine Öffnung (9r), um das Einsetzen einer Vorrichtung (12) zum Reinigen einer Filterpatrone (2) zu ermöglichen; und
- die andere Öffnung (9f, 10f), um einen Anschluß des Behälters an den Kreislauf (11), in den das zu filtrierende Fluid fließt, und an einen Druckluftkreislauf(13), zu ermöglichen;
wobei die Tragplatte (5) und die Deckelplatte (4) mit einer Einrichtung versehen sind zum jeweiligen Auf- und Abbewegen um eine vorbestimmte Distanz, um zu ermöglichen, daß das drehbare Element (6) eine vorbestimmte Drehung um den Punkt (O) ausführen kann.

3. Vorrichtung nach Anspruch 2,
**dadurch gekennzeichnet,**
**daß** jeder Behälter (3) an seinem unteren Ende mit einer flachen, nach außen öffnenden Kerbe (14) versehen ist, die unter der zugehörigen Filterhülse (2) angeordnet ist, die insgesamt auf der entsprechenden Klappe (14) stehen.

4. Vorrichtung nach einem der vorhergehenden Ansprüche,
**dadurch gekennzeichnet,**
**daß** zwischen die Ränder jedes Behälters (3) und die Tragplatte (5) und die Deckelplatte (4) elastische Dichtungen (15) eingefügt sind.

5. Vorrichtung nach einem der vorhergehenden Ansprüche,
**dadurch gekennzeichnet,**
**daß** die Behälter (3) zylindrisch sind und daß zwischen jedem Behälter und der zugehörigen Filterhülse (2), die koaxial angeordnet und ebenfalls zylindrisch ist, ein um den Außenumfang der Hülse umlaufender Spalt (16) mit einer bestimmten Spaltbreite vorhanden ist.

6. Vorrichtung nach einem der vorhergehenden Ansprüche,
**dadurch gekennzeichnet,**
**daß** das zu filternde Fluid radial von der Innenseite der Filterhülse (2) nach außen strömt.

7. Vorrichtung nach einem der vorhergehenden Ansprüche,
**dadurch gekennzeichnet,**
**daß** "2n" Behälter (3) und "n" Vorrichtungen (12) vorgesehen sind, die in eine Filterhülse (2) einbringbar sind, um die Filterhülse von innen nach außen zu reinigen.

8. Vorrichtung nach Anspruch 7,
**dadurch gekennzeichnet,**
**daß** die Vorrichtungen vertikal bewegbare, rotierende Köpfe (12) zum Sprühen eines mehrdimensionalen Sprühnebels einer gewünschten Flüssigkeit aufweist, um die Filterhülsen (2) zu reinigen.

9. Vorrichtung nach einem der vorhergehenden Ansprüche,
**dadurch gekennzeichnet,**
**daß** unter jeder Öffnung (7r) in der Tragplatte (5) zum Durchleiten der Filterrückstände (8) ein Sammelelement (17) vorgesehen ist, das zum Rückhalten der Rückstände geeignet ist.

## Revendications

1. Appareil (1) pourvu de cartouches de filtrage (2) qui filtrent un fluide les traversant le long d'un circuit prédéterminé et d'un moyen qui retire de façon cyclique les résidus de filtrage de ces cartouches (2), l'appareil étant **caractérisé en ce qu'**il comprend :
- un nombre pair de récipients (3) ouverts à leurs extrémités pour saisir les dites cartouches de filtrage (2) ;
- une pluralité de stations de filtrage (F) en alternance avec un nombre équivalent de stations d'enlèvement (R) où les résidus sont retirés des cartouches de filtrage (2), les stations étant disposées symétriquement par rapport à un point prédéterminé (O) ;
- une plaque de recouvrement (4) reposant sur les extrémités supérieures de tous les dits récipients (3) ; et
- une plaque de support (5) disposée sous les dits récipients (3) ;
le dispositif (1) étant aussi pourvu d'un moyen (6) pour faire tourner ensemble tous les récipients (3) d'une station à une station adjacente, avec un moyen pour déplacer les dites plaques de recouvrement (4) et de support (5) d'une distance prédéterminée dans des positions verticales opposées de façon à permettre aux récipients (3) de tourner ensemble de cette façon.

2. Appareil selon la revendication 1, **caractérisé en ce qu'**il comprend :
a) un nombre pair « 2n » de récipients (3) disposés symétriquement par rapport à un point prédéterminé (O), chacun contenant une cartouche de filtrage (2) et étant reliés les uns aux autres par un élément (6) pouvant tourner autour du dit point (O) ;
b) une plaque de support (5) sur laquelle reposent les dits récipients (3), cette plaque étant pourvue, en-dessous de chaque récipient, d'une ouverture (7r, 7f), les deux ouvertures étant adjacentes, l'une (7f) étant destinées à être traversée par le dit fluide après filtration et l'autre (7r) à être traversée par les dits résidus de filtrage ;
c) une plaque de recouvrement (4) reposant sur les extrémités supérieures des dits récipients (3) et pourvue de groupes d'une ou plusieurs ouvertures (9r, 9f, 10f) situées au-dessus de ces récipients, tout ensemble de deux groupes d'ouvertures adjacentes étant respectivement conçu
- l'un (9r) pour permettre l'introduction d'un dispositif (12) de nettoyage d'une cartouche de filtrage (2) ; et
- l'autre (9f, 10f) pour permettre la liaison d'un récipient (3) au dit circuit (11) autour duquel s'écoule le fluide à filtrer et à un circuit à air comprimé (13) ;
les dites plaques de support (5) et de recouvrement (4) étant pourvues de moyens pour les déplacer vers le bas et vers le haut, respectivement, d'une distance prédéterminée pour permettre au dit élément tournant (6) d'exécuter une rotation prédéterminée autour du dit point (0).

3. Appareil selon la revendication 2, dans lequel chaque récipient (3) est pourvu à son extrémité inférieure d'une trappe plate (14) ouvrant vers l'extérieur située sous la cartouche de filtrage (2) associée, dont la totalité se trouve sur la dite trappe (14).

4. Appareil selon l'une des revendications précédentes, dans lequel des joints élastiques (15) sont introduits entre les bords de chaque récipient (3) et les dites plaques de support (5) et de recouvrement (4).

5. Appareil selon l'une des revendications précédentes, dans lequel les récipients (3) sont cylindriques et, entre chacun d'entre eux et la cartouche de filtrage (2) qui lui est associée, laquelle est coaxiale et aussi cylindrique, est ménagé tout autour du périmètre extérieur de la cartouche un espace (16) d'une épaisseur prédéterminée.

6. Appareil selon l'une des revendications précédentes, dans lequel le fluide à filtrer s'écoule radialement vers l'extérieur depuis l'intérieur de la cartouche de filtrage (2).

7. Appareil selon l'une des revendications précédentes, comprenant « 2n » récipients (3) et comportant « n » dispositifs (12) pouvant être introduits à l'intérieur d'une cartouche de filtrage (2) afin de la nettoyer de l'intérieur vers l'extérieur.

8. Appareil selon la revendication 7, dans lequel les dits dispositifs comprennent des tètes rotatives (12) mobiles verticalement pour pulvériser un jet multidirectionnel d'un liquide désiré pour nettoyer les cartouches de filtrage (2).

9. Appareil selon l'une des revendications précédentes dans lequel, sous chacune des dites ouvertures (7r) de la plaque de support (5) à travers lesquelles passent les résidus de filtrage (8), se trouve un élément collecteur (17) apte à porter les dits résidus.
